# EUROPEAN PATENT SPECIFICATION

(11) **EP 2 535 176 B1**
(45) Date of publication and mention of the grant of the patent: **22.10.2014**
(21) Application number: 12171689.8
(22) Date of filing: 12.06.2012
(51) Int. Cl.: B29D 30/48

(54) **A method and apparatus for forming a tyre apex and bead wire assembly.**
Verfahren und Vorrichtung zur Herstellung von Wulstkernpaketen für Luftreifen.
Procédé et dispositif de fabrication d'ensembles talon-remplissage pour pneus de véhicules.

(30) Priority: 14.06.2011 US 201161496736 P
(43) Date of publication of application: 19.12.2012
(73) Proprietor: The Goodyear Tire & Rubber Company, Akron, OH 44316-0001 (US)
(72) Inventor: Vargo, Richard David, Cuyahoga Falls, OH 44223 (US); Burg, Gary Robert, Massillon, OH 44646 (US); Koch, Brian Richard, Hartville, OH 44632 (US); Spallone, Daniel Michael, Lyndhurst, OH 44124 (US)
(74) Representative: Kutsch, Bernd

(56) References cited:
- EP-A1- 1 800 847
- EP-A1- 1 800 848
- EP-A2- 0 968 814
- DE-A1- 3 108 142
- DE-A1-102007 018 971
- US-A- 4 933 034
- US-A1- 2009 188 607
- US-A1- 2009 266 474

## Description

### Technical Field

This invention relates to a method and apparatus for forming a tire apex and bead wire assembly or an annular bead apex or bead filler.

### Background of the Invention

The invention relates to a method and apparatus of forming an annular bead apex and bead core subassembly. The bead apex is a rubber component that lies radially outward of an annular tensile member commonly referred to as a bead core. The shape of the bead apex is generally an elongated triangular shape resulting in a very long and thin delicate apex. The tire's carcass plies lie adjacent the radially inner surface of the bead apex and generally wrap around the bead core and extend along the axially outer surface of the bead apex in what is commonly referred to as the ply turnup.

When the tire is built flat, the apex must be turned 90°to an upright position. This forces the radially outermost tip of the bead apex to stretch circumferentially a larger amount than the innermost portion of the apex (next to the bead) resulting in high stresses and localized thinning of the bead apex.

It is difficult to manufacture bead apex subassemblies. As the apex shape becomes taller and thinner, the more difficult it is to manufacture because of the delicateness of the apex. One issue is ensuring the apex has sufficient adhesion to the bead wire. A large amount of force is typically needed to ensure there is a mechanical bond between the apex rubber and the bead. If a flat plate or other forming device is used to form the annular apex, then it is difficult to remove the formed apex from the plate due to adhesion. Attempts have been made to make uncured strips of bead apexes but the elongated tip of these apexes when formed into an annular ring tend to warp and buckle as the extrudate unevenly stretches and shrinks. This warping or buckling renders such parts useless. Accordingly, only very short squatty apexes lend themselves to this type of preforming. A third issue in manufacturing the apex and bead subassembly involves forming a splice of the apex.

Thus it is desired to provide a method and apparatus that can form an annular elastomeric strip such as an apex component without the unwanted stretching or warping of the tip. It is further desired to provide a method and apparatus for making an elongated apex or other strip of tire material in a profile oriented very close to the shape of the finished molded tire. It is further desired to provide a method for manufacturing multilayered components of different materials or multilayered components of similar material. It is also desired to provide a method that creates a smooth overlap of the beginning of an annular component and an end of the component such that the part appears seamless.

EP-A- 1 800 848 describes a method for forming a bead filler by extruding layers of rubber on a bead wire which is laying on a plate. Prior to the position of the rubber strips on the plate, these are shaped between two rollers.

Further methods and apparatus for forming a tire apex and bead wire assembly are described in EP-A- 1 800 847, DE- A- 10 2007 018 971 and US-A-2009/266474.

### Summary of the Invention

The invention relates to a method in accordance with claim 1 and to an apparatus in accordance with claim 6.

Dependent claims refer to preferred embodiments of the invention.

### Brief Description of the Drawings

The invention will be described by way of example and with reference to the accompanying drawings in which:
Figure 1 is a cross sectional view of a bead apex machine of the present invention.
Figure 2 is a side view of the bead apex machine of Figure 1.
Figure 3 is a close-up side view of a portion of the apparatus shown in Figure 1 of the present invention.
Figure 4 is a front view of a portion of the bead and bead holder showing a portion of the apex being formed by the rollers.
Figures 5 and 6 illustrate a second embodiment for forming an apex and bead subassembly.
Figure 7 illustrates an apex and bead subassembly of the present invention.
Figures 8 through 10 depict a third embodiment for forming a bead apex subassembly of the present invention.

### Detailed Description of the Invention

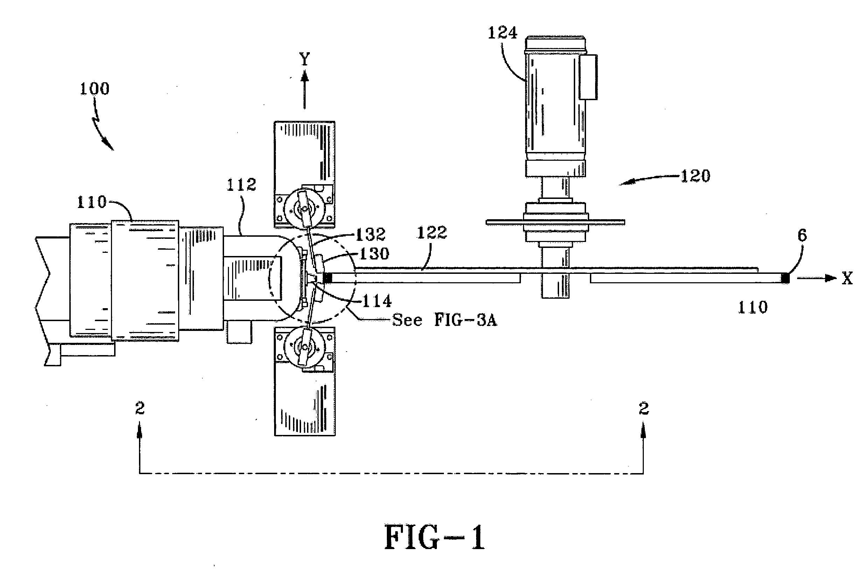

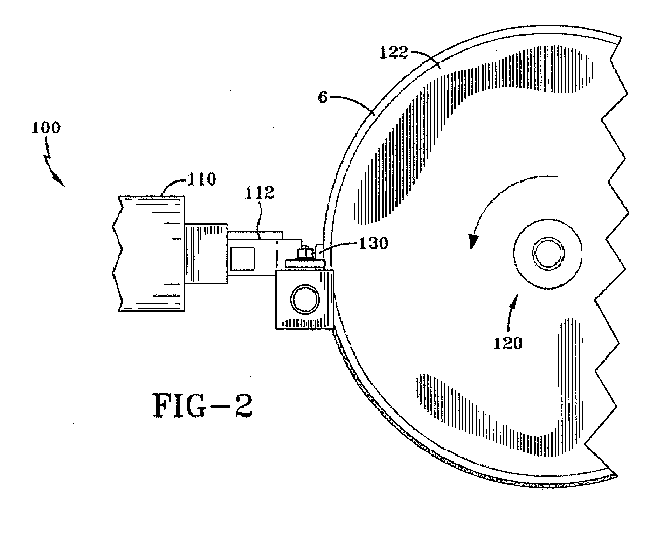

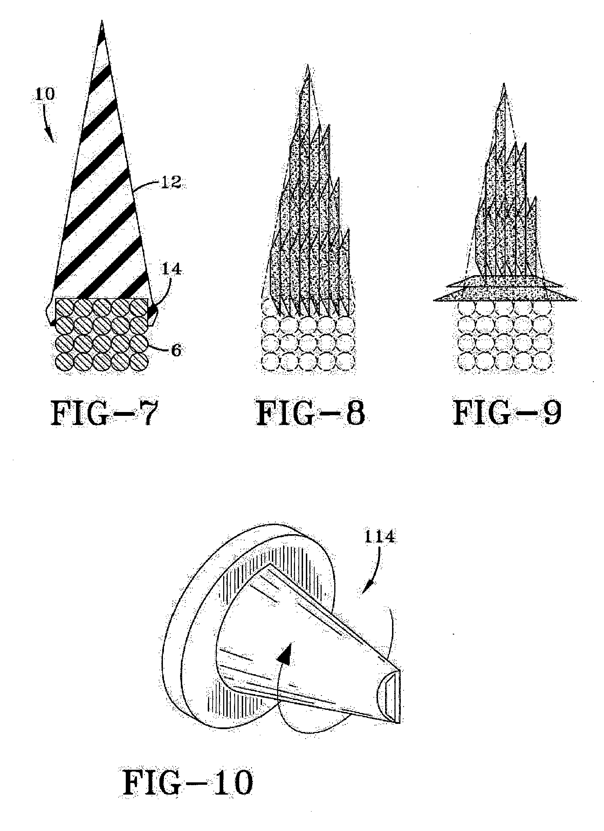

With reference to Figures 1 and 2, a machine 100 for forming an elastomeric annular component is shown. The invention is particularly suited for forming rubber tire components, and more particularly, a bead apex assembly. However, the invention is not limited to forming apexes, and could form annular elastomeric components. One example of a bead apex assembly 10 is illustrated in Figure 7. As shown, the bead apex assembly 10 has a triangular shaped apex 12 made of elastomeric material. Radially inward of the bead apex is an annular tensile member commonly referred to as a metal bead core 6 formed of a plurality of bead wires. The elastomeric material forming the bead apex should have impregnated the bead core 6 formings legs 14 which impregnate the bead. The apex is not limited to the cross-sectional shape of a triangle, and may be formed of any desired cross-sectional shape. The invention could also be used to form other annular tire components that do not have a bead core.

The machine 100 has an extruder means 110 for forming a continuous elastomeric strip 10, preferably formed of rubber. The extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has an L/D of 8, but may range from 5 to 25, preferably 10-15. A ring type, pin type or MCT type of extruder is preferred. The extruder functions to warm up the rubber compound to the temperature in the range of 80°C to 150°C, preferably 90°C to 120°C, and to masticate the rubber composition as needed. The extruder means 110 may be an extruder only, but is preferably an extruder in combination with a gear pump 112. The extruder or gear pump/extruder has an outlet end which preferably has a nozzle 114. The nozzle has an outlet orifice 116 having a desired profile shape for shaping the elastomeric material. The nozzle is positioned adjacent a bead holder 120. The bead holder 120 is configured to support the annular bead from its interior surface and to rotate the annular bead about its central axis. The bead holder 120 has an annular support device 122 which is rotatably mounted to a motor 124. The bead holder 120 functions to support and rotate the annular bead as an apex is formed on the outer surface. The bead holder 120 may translate incrementally in the Y direction to assist in even application of the elastomeric strip onto the bead.

Located adjacent the bead holder is one or more shaping rollers 130. Each shaping roller 130 is rotatably mounted on a support arm 132, 132' for rotation about a transverse axis X'. Each shaping roller is independently movable with respect to the other shaping roller. The arm 132, 132' is mounted so that it can translate the roller in the X' direction and pivot the shaping rollers 130 about its longitudinal or Y' axis, which is transverse to the X' axis. The shaping rollers can pivot +- 90 degrees about the Y' axis. The roller has an outer surface 134 for contacting the apex which is flat with rounded edges.

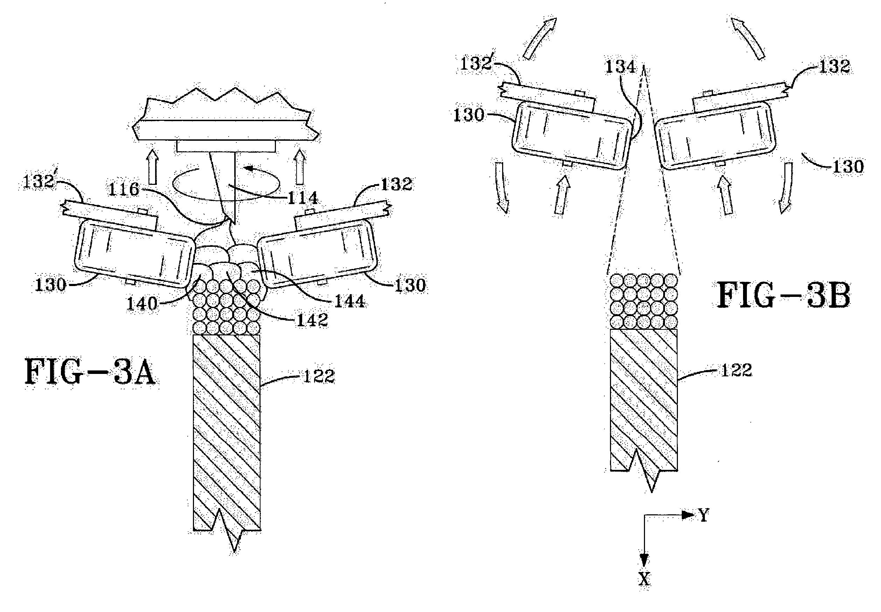

The method of forming the bead apex assembly may now be described. First, an annular bead is mounted and secured onto the bead holder such that the outer radial bead surface is unrestricted. The bead holder is rotated to a desired speed. The nozzle of the extruder apparatus is positioned adjacent the bead bundle for application of a thin strip of elastomeric material to the outer surface of the annular bead. The elastomeric material is preferably applied in a continuous strip. The elastomeric material penetrates into the bead wire bundle as a result of the high pressure of the rubber being released from the extruder nozzle. As shown in Figure 3, the strip of the first rotation or pass is identified as 140. After the first pass or first full rotation, the nozzle is translated a small amount in the Y direction and a second pass 142 (or second full rotation) of the strip is applied adjacent to the first pass. The second pass 142 of the strip may overlap the first pass 140. A third pass 144 of the strip is then applied, which may or may not overlap the second pass 142. A computer software program may be used to model the most efficient layout of the strip passes to closely approximate the final apex shape as efficiently as possible. The computer software may communicate with a computer controller to coordinate the motion of the gear pump extruder, the rollers 130 translation, rotation and pivot motion and the bead holder rotation and translation.

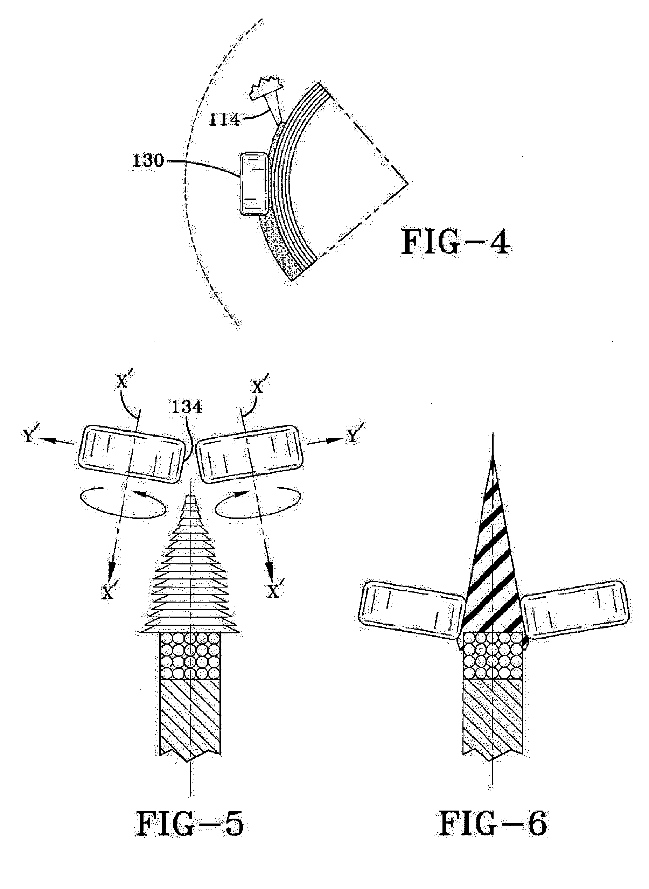

While the apex is being formed by one or more of the strip passes, the rollers 130 are rotated such that the outer roller surface engages a respective side edge of the apex. The rollers may be pivoted or tilted slightly so that the outer roller surface 134 is perpendicular to the side edge of the apex. Sufficient pressure is applied by the forming rollers to the apex outer surface in order to smooth the outer side edge surface of the apex, as shown in Figure 5. The rollers are moved along the apex outer surface in order to smooth the entire outer side edge of the apex. After the side edges of the apex are sufficiently smooth, the apex and bead assembly is removed from the bead holder and is ready to be mounted in a tire.

Alternatively, the apex may be shaped by the rollers 130 after the apex has been sufficiently formed by all of the desired passes.

The apex material is preferably formed of a rubber or elastomeric compound having a G' in the range of 150 to 350 kPa, and more preferably in the range of 190 to 310 kPa. Unless otherwise noted, all G' values are measured on an uncured rubber sample at a sample temperature of 190 deg C, at a measurement frequency of 10 Hz and at a strain amplitude of 15%. The rubber sample is taken from a cured tire manufactured to the desired manufacturer specifications. For the purposes of this invention, the storage modulus property G' is a viscoelastic property of a rubber composition and may be determined by a dynamic mechanical analyzer over a range of frequencies, temperature and strain amplitude. One example of a dynamic mechanical analyzer (DMA) suitable for measuring G', G" is model number DMA +450 sold by the 01-dB Metravib company. The DMA instrument uses dynamic mechanical analysis to evaluate rubber compositions. A cured sample of the respective rubber composition is subjected to a precisely controlled dynamic excitation (frequency and amplitude) at a frequency (Hertz) and temperature (°C) and the sample stress response is observed by the instrument. The observed sample response can be separated, by the instrument, into viscous or loss modulus (G") and elastic or storage modulus (G') components. Unless otherwise indicated, all G" are measured at the same conditions as G'.

The invention further includes an apparatus for forming an elastomeric component, the apparatus having a rotatable holder for securing the elastomeric component thereon; a means for rotating the holder; an extruder positioned adjacent the holder for extruding one or more passes of a continuous strip of elastomeric material onto the outer surface of the holder; and two opposed rollers positioned adjacent the extruder outlet and the holder, wherein the rollers are rotatably mounted about a first axis and positioned for shaping the one or more passes of elastomeric material to a predetermined profile. The apparatus may further include wherein each roller is pivotable about its rotational axis. The apparatus may additionally include wherein each roller is independently pivotable about its rotational axis. The apparatus also may include wherein each roller is independently translatable along its rotational axis. The apparatus may optionally include an extruder having an outlet nozzle, and wherein the outlet nozzle is rotatable.

Other annular components could also be made by the invention such as chafers or sidewalls.

## Claims

1. A method of forming a tire apex and bead wire assembly, the method comprising the steps of:
mounting the bead wire (6) in holder (120);
rotating the bead wire (6) and extruding one or more passes of a strip of elastomeric material onto an outer surface of the bead wire (6); and
shaping the one or more passes of elastomeric material as extruded onto the outer surface of the bead wire (6) between two rollers (130).

2. The method of claim 1 wherein the holder (120) is a rotatable bead holder and wherein rotating the bead wire (6) comprises rotating the bead wire (6) and the rotatable bead holder.

3. The method of claim 1 or 2 wherein the two rollers (130) are opposed rotating rollers.

4. The method of at least one of the previous claims wherein each roller (120) is translatable and translated during the shaping of the one or more passes of elastomeric material.

5. The method of at least one of the previous claims wherein the method comprises the step of extruding a plurality of passes, preferably at least 3 or 4 passes, of the strip of elastomeric material onto the outer surface of the bead wire (6).

6. An apparatus for forming a tire apex and bead wire assembly, the apparatus comprising:
a bead holder (120) for securing the bead wire (6) thereon;
means for rotating the bead wire (6);
an extruder positioned adjacent the bead wire (6) for extruding one or more passes of a continuous strip of elastomeric material onto an outer surface of the bead wire (6), the extruder comprising an outlet (116); and
two rollers (130) positioned adjacent the extruder outlet (116) and the bead holder (120), wherein each of the two rollers (130) is rotatably mounted about a respective first axis and positioned for shaping the one or more passes of elastomeric material as extruded onto the outer surface of the bead wire (6) to a predetermined profile.

7. The apparatus of claim 6 wherein the bead holder (120) is a rotatable bead holder.

8. The apparatus of claim 6 or 7 wherein the means is a means for rotating the bead wire (6) and the bead holder (120).

9. The apparatus of at least one of the claims 6 to 8 wherein the two rollers (120) are opposed rollers.

10. The apparatus of at least one of the claims 6 to 9 wherein each roller (120) is pivotable about its rotational axis.

11. The apparatus of claim 10 wherein each roller is independently pivotable about its rotational axis.

12. The apparatus of at least one of the claims 6 to 11 wherein each roller (120) is translatable, preferably independently translatable, along its rotational axis.

13. The apparatus of at least one of the claims 6 to 12 wherein the rollers (130) are independently rotatable of each other.

14. The apparatus of at least one of the claims 6 to 13 wherein each roller (120) is translatable, preferably independently translatable, along at least one respective axis such as in an X direction.

15. The apparatus of at least one of the claims 8 to 14 wherein the outlet (116) is a rotatable outlet nozzle.

## Patentansprüche

1. Verfahren zur Herstellung von Wulstkernpaketen, wobei das Verfahren folgende Schritte umfasst:
Montieren des Wulstkerns (6) in der Halterung (120);
Rotieren des Wulstkerns (6) und Extrudieren eines oder mehrerer Längen eines Streifens Elastomermaterial auf eine Außenfläche des Wulstkerns (6); und
Formens der einen oder mehr Längen Elastomermaterial, wie auf die Außenfläche des Wulstkerns (6) extrudiert, zwischen zwei Rollen (130).

2. Verfahren nach Anspruch 1, wobei die Halterung (120) eine rotierbare Wulsthalterung ist und wobei das Rotieren des Wulstkerns (6) das Rotieren des Wulstkerns (6) und der rotierbaren Wulsthalterung umfasst.

3. Verfahren nach Anspruch 1 oder 2, wobei die zwei Rollen (130) entgegengesetzt rotierende Rollen sind.

4. Verfahren nach mindestens einem der vorgenannten Ansprüche, wobei jede Rolle (120) translatierbar ist und während des Formens der einen oder mehreren Längen Elastomermaterial translatiert wird.

5. Verfahren nach mindestens einem der vorgenannten Ansprüche, wobei das Verfahren den Schritt des Extrudierens mehrerer Längen, bevorzugt mindestens 3 oder 4 Längen, des Streifens Elastomermaterial auf die Außenfläche des Wulstkerns (6) umfasst.

6. Vorrichtung zur Herstellung von Wulstkernpaketen, wobei die Vorrichtung umfasst:
eine Wulsthalterung (120) zum daran Sichern des Wulstkerns (6),
Mittel zum Rotieren des Wulstkerns (6);
einen benachbart zu dem Wulstkern (6) positionierten Extruder zum Extrudieren einer oder mehrerer Längen eines kontinuierlichen Streifens Elastomermaterial auf eine Außenfläche des Wulstkerns (6), wobei der Extruder einen Auslass (116) umfasst; und
zwei benachbart zu dem Extruderauslass (116) und der Wulsthalterung (120) positionierte Rollen (130), wobei jede der zwei Rollen (130) rotierbar um eine jeweilige erste Achse montiert ist und dazu angeordnet ist, die eine oder mehr Längen Elastomermaterial, wie auf die Außenfläche des Wulstkerns (6) extrudiert, zu einem vorbestimmten Profil zu formen.

7. Vorrichtung nach Anspruch 6, wobei die Wulsthalterung (120) eine rotierbare Wulsthalterung ist.

8. Vorrichtung nach Anspruch 6 oder 7, wobei das Mittel ein Mittel zum Rotieren des Wulstkerns (6) und der Wulsthalterung (120) ist.

9. Vorrichtung nach mindestens einem der Ansprüche 6 bis 8, wobei die zwei Rollen (120) entgegengesetzte Rollen sind.

10. Vorrichtung nach mindestens einem der Ansprüche 6 bis 9, wobei jede Rolle (120) um ihre Drehachse schwenkbar ist.

11. Vorrichtung nach Anspruch 10, wobei jede Rolle unabhängig um ihre Drehachse schwenkbar ist.

12. Vorrichtung nach mindestens einem der Ansprüche 6 bis 11, wobei jede Rolle (120) um ihre Drehachse translatierbar, bevorzugt unabhängig translatierbar ist.

13. Vorrichtung nach mindestens einem der Ansprüche 6 bis 12, wobei die Rollen (130) unabhängig voneinander rotierbar sind.

14. Vorrichtung nach mindestens einem der Ansprüche 6 bis 13, wobei jede Roller (120) entlang mindestens einer betreffenden Achse, wie etwa in einer X-Richtung, translatierbar, bevorzugt unabhängig translatierbar ist.

15. Vorrichtung nach mindestens einem der Ansprüche 8 bis 14, wobei der Auslass (116) eine rotierbare Auslassdüse ist.

## Revendications

1. Procédé de formation d'un assemblage d'un bourrage sur tringle et d'un fil métallique de talon de bandage pneumatique, le procédé comprenant les étapes consistant à :
monter le fil métallique de talon (6) dans un dispositif de support (120) ;
soumettre à une rotation le fil métallique de talon (6) et extruder un ou plusieurs passages d'une bande de matière élastomère sur la surface supérieure du fil métallique de talon (6) ; et
configurer lesdits un ou plusieurs passages de matière élastomère à l'état extrudé sur la surface externe du fil métallique de talon (6) entre deux cylindres (130).

2. Procédé selon la revendication 1, dans lequel le dispositif de support (120) est un dispositif de support de talon rotatif et dans lequel la mise en rotation du fil métallique de talon (6) comprend la mise en rotation du fil métallique de talon (6) et du dispositif de support de talon rotatif.

3. Procédé selon la revendication 1 ou 2, dans lequel les deux cylindres (130) sont des cylindres rotatifs opposés.

4. Procédé selon au moins une des revendications précédentes, dans lequel chaque cylindre (120) peut effectuer un mouvement de translation et est soumis à un mouvement de translation lors de la configuration desdits un ou plusieurs passages de matière élastomère.

5. Procédé selon au moins une des revendications précédentes, dans lequel le procédé comprend l'étape d'extrusion de plusieurs passages, de préférence d'au moins 3 ou 4 passages, de la bande de matière élastomère sur la surface externe du fil métallique de talon (6).

6. Appareil pour former un assemblage d'un bourrage sur tringle et d'un fil métallique de talon de bandage pneumatique, l'appareil comprenant :
un dispositif de support de talon (120) pour y fixer le fil métallique de talon (6) ;
un moyen pour la mise en rotation du fil métallique de talon (6) ;
une extrudeuse disposée en position adjacente au fil métallique de talon (6) pour l'extrusion d'un ou de plusieurs passages d'une bande continue de matière élastomère sur la surface externe du fil métallique de talon (6), l'extrudeuse comprenant une sortie (116); et
deux cylindres (130) disposés en position adjacente à la sortie (116) de l'extrudeuse et au dispositif de support de talon (120), chacun des deux cylindres (130) étant monté en rotation autour d'un premier axe respectif et étant positionné pour la configuration desdits un ou plusieurs passages de matière élastomère à l'état extrudé sur la surface externe du fil métallique de talon (6) pour obtenir un profit prédéterminé.

7. Appareil selon la revendication 6, dans lequel le dispositif de support de talon (120) est un dispositif de support de talon rotatif.

8. Appareil selon la revendication 6 ou 7, dans lequel le moyen est un moyen pour la mise en rotation du fil métallique de talon (6) et du dispositif de support de talon (120).

9. Appareil selon au moins une des revendications 6 à 8, dans lequel les deux cylindres (120) sont des cylindres opposés.

10. Appareil selon au moins une des revendications 6 à 9, dans lequel chaque cylindre (120) est à même de pivoter autour de son axe de rotation.

11. Appareil selon la revendication 10, dans lequel chaque cylindre (120) est à même de pivoter de manière indépendante autour de son axe de rotation.

12. Appareil selon au moins une des revendications 6 à 11, dans lequel chaque cylindre (120) peut être soumis à un mouvement de translation, de préférence peut être soumis à un mouvement de translation de manière indépendante, le long de son axe de rotation.

13. Appareil selon au moins une des revendications 6 à 12, dans lequel les cylindres (120) peuvent être mis en rotation indépendamment l'un de l'autre.

14. Appareil selon au moins une des revendications 6 à 13, dans lequel chaque cylindre (120) peut être soumis à un mouvement de translation, de préférence peut être soumis à un mouvement de translation de manière indépendante, le long d'au moins un axe respectif comme par exemple dans la direction X.

15. Appareil selon au moins une des revendications 8 à 14, dans lequel la sortie (116) est une buse de sortie rotative.
